# EUROPEAN PATENT SPECIFICATION

(11) **EP 2 954 001 B1**
(45) Date of publication and mention of the grant of the patent: **04.01.2017**
(21) Application number: 14710977.1
(22) Date of filing: 08.02.2014
(51) Int. Cl.: C08K 3/04, B60C 1/00, C08L 7/00, C08L 9/00, C08L 61/06, C08L 61/14, C08L 61/28, C08K 5/25

(54) **TYRE HIGH-STIFFNESS COMPOUND**
HOCHSTARRE VERBINDUNG FÜR REIFEN
COMPOSÉ CONFÉRANT UNE RIGIDITÉ ÉLEVÉE AUX PNEUS

(30) Priority: 08.02.2013 IT RM20130071
(43) Date of publication of application: 16.12.2015
(73) Proprietor: Bridgestone Corporation, Tokyo 104-8340 (JP)
(72) Inventor: AGORETTI, Pasquale, 00040 Ariccia (IT); BOTTI, Francesco, 00154 Roma (IT)
(74) Representative: Marchetti, Alessio
(86) International application number: PCT/IB2014/058871
(87) International publication number: WO 2014/122623

(56) References cited:
- EP-A2- 1 876 203
- WO-A1-2011/061598
- WO-A1-2012/053579
- US-A- 5 430 087
- US-A- 5 798 405
- US-A1- 2004 182 486
- US-A1- 2012 184 658

## Description

### TECHNICAL FIELD

The present invention relates to a tyre high-stiffness compound.

More specifically, the present invention relates to a compound for a structural tyre component, such as a TREAD UNDERLAYER, TREAD BASE, BEAD FILLER, ABRASION GUM STRIP or SIDEWALL.

The term 'cross-linkable, unsaturated-chain polymer base' is intended to mean any non-cross-linked natural or synthetic polymer capable, when cross-linked (cured) with sulphur-based systems, of assuming all the chemical, physical and mechanical characteristics typical of elastomers.

The term 'curing agents' is intended to mean substances, such as sulphur and accelerants, capable of cross-linking the polymer base.

The term 'methylene donor' resin is intended to mean a resin capable of methylene bridge cross-linking in the presence of a 'methylene acceptor' compound.

### BACKGROUND ART

As is known, there is a strong demand within the tyre industry for compounds from which to produce tyre components of low hysteresis and, therefore, improved rolling resistance, but without compromising other characteristics, such as stiffness, affecting handling performance of the tyre.

Individual tyre component characteristics are commonly tailored on the basis of the type and amount of carbon black employed in the respective compounds.

ASTM Standard D1765 classifies carbon black according to its surface area.

More specifically, in ASTM Standard D1765, carbon black is classified as N1, N2, N3, N5 and N6, where N1 indicates a surface area of 121 to 150 m²/g; N2 a surface area of 100 to 120 m²/g; N3 a surface area of 70 to 99 m²/g; N5 a surface area of 40 to 49 m²/g; and N6 a surface area of 33 to 39 m²/g.

As anyone skilled in the art knows, high-surface-area carbon black improves stiffness characteristics, but also increases hysteresis and, therefore, rolling resistance. Whereas low-surface-area carbon black reduces hysteresis and, therefore, rolling resistance, but impairs stiffness characteristics.

To obtain a compound capable of achieving both good rolling resistance and good handling performance, a common practice is to employ an intermediate carbon black class (N3), or to combine two different carbon black classes to balance the stiffness and hysteresis effects of one with those of the other. Though neither of these two solutions impairs hysteresis or stiffness, neither do they bring about any significant improvement.

Demand therefore exists for a rubber compound of superior stiffness, but without compromising its rolling resistance.

### DISCLOSURE OF INVENTION

According to the present invention, there is provided a structural tyre component compound comprising a cross-linkable, unsaturated-chain polymer base, a reinforcing filler, and curing agents; said compound being characterized by comprising a mixture of reinforcing resins, in turn comprising (a) a methylene acceptor resin combined with a methylene donor compound, and (b) a hydrazide-derived resin; and in that said reinforcing filler comprises a mixture of 20 to 80% by weight of carbon black with a hydrogen-absorption-measured surface area (N2SA) of 100 to 150 m²/g, and 80 to 20% by weight of carbon black with a hydrogen-absorption-measured surface area (N2SA) of 33 to 49 m²/g.

Preferably, the compound comprises 2 to 20 phr of the reinforcing resin mixture, and 20 to 70 phr of the carbon black total.

Preferably, the methylene acceptor resin is phenol-formaldehyde resin, and the methylene donor compound is hexamethoxymethylmelamine.

Preferably, the reinforcing resin mixture comprises 20 to 80% by weight of phenol-formaldehyde resin, and 20 to 80% by weight of hydrazide-derived resin.

Preferably, the hydrazide-derived resin is selected from the group comprising 2-hydroxy-N'-(1-methylethylidene)-3-naphthoic acid hydrazide, 2-hydroxy-N'-(1-methylpropylidene)-3-naphthoic acid hydrazide, 2-hydroxy-N'-(1-methylbutylidene)-3-naphthoic acid hydrazide, 2-hydroxy-N'-(1,3-dimethylbutylidene)-3-naphthoic acid hydrazide, 2-hydroxy-N'-(2,6-dimethyl-4-heptylidene)-3-naphthoic acid hydrazide, N'-(1-methylethylidene)-salicylic acid hydrazide, N'-(1-methylpropylidene)-salicylic acid hydrazide, N'-(1-methylbutylidene)-salicylic acid hydrazide, N'-(1,3-dimethylbutylidene)-salicylic acid hydrazide, and N'-(2,6-dimethyl-4-heptylidene)-salicylic acid hydrazide.

Preferably, the cross-linkable, unsaturated-chain polymer base comprises 40 to 80 phr of natural rubber; and 20 to 60 phr of synthetic rubber in the group comprising butadiene rubber, styrene-butadiene rubber, and isoprene rubber.

The compound according to the present invention is preferably used for making components such as a TREAD UNDERLAYER, TREAD BASE, BEAD FILLER, ABRASION GUM STRIP or SIDEWALL.

According to the present invention, there is also provided a component made from a compound according to the present invention.

According to the present invention, there is also provided a tyre comprising a component made from a compound according to the present invention.

### BEST MODE FOR CARRYING OUT THE INVENTION

The following are non-limiting examples for a clearer understanding of the present invention.

### EXAMPLES

Five control compounds (Ctrl 1 - Ctrl 5) and one compound according to the present invention (Compound A) were prepared. More specifically, the control compounds employ : the mixture of two carbon blacks according to the invention, with no resin mixture according to the invention (Ctrl 1); the resin mixture according to the invention, with only one carbon black (Ctrl 2 and Ctrl 3); and the mixture of carbon blacks according to the invention, with only one resin (Ctrl 4 and Ctrl 5). Whereas the compound according to the invention (Compound A) employs both the mixture of carbon blacks and the mixture of reinforcing resins as indicated in the main Claim.

### - Compound preparation -

### (First mixing step)

A 230-270-litre, tangential-rotor mixer was loaded, prior to mixing, with the cross-linkable polymer base and part of the carbon black (50 to 75% of the total amount used in the compound) to a fill factor of 66-72%.

The mixer was operated at a speed of 40-60 rpm, and the resulting mixture unloaded on reaching a temperature of 140-160°C.

### (Second mixing step)

The rest of the carbon black, the methylene acceptor compound, and the hydrazine-derived resin (if necessary) were added to the mixture from the first step. The mixer was operated at a speed of 40-60 rpm, and the resulting mixture unloaded on reaching a temperature of 130-150°C.

### (Third mixing step)

The curing agents and, if necessary, the methylene donor compound were added to the mixture from the second step to a fill factor of 63-67%.

The mixer was operated at a speed of 40-60 rpm, and the resulting mixture unloaded on reaching a temperature of 100-110°C.

Table I shows the compositions in phr of the five control compounds and the compound according to the invention.

**TABLE I**

| | Ctrl.1 | Ctrl.2 | Ctrl.3 | Ctrl.4 | Ctrl.5 | A |
|---|---|---|---|---|---|---|
| NR | 70 | | | | | |
| BR | 30 | | | | | |
| N2 | 10 | 40 | -- | 10 | 10 | 10 |
| N5 | 30 | -- | 40 | 30 | 30 | 30 |
| Methylene acceptor resin | -- | 5 | 5 | 8 | -- | 5 |
| Methylene donor compound | -- | 1.65 | 1.65 | 2.65 | -- | 1.65 |
| Hydrazide resin | -- | 3 | 3 | -- | 8 | 3 |
| Sulphur | 2.2 | | | | | |
| Accelerant | 1.2 | | | | | |

NR is natural rubber; BR is butadiene rubber; the methylene acceptor resin is phenol-formaldehyde; the methylene donor compound is hexamethoxymethylmelamine; and the hydrazide resin is 2-hydroxy-N'-(1,3-dimethylbutylidene)-3-naphthoic acid hydrazide (BMH).

The compounds described above were tested as per ISO Standard 4664 to measure elastic modulus E' (30°C) and TanD (60°C) and determine stiffness and rolling resistance respectively.

Table II shows the rolling resistance and stiffness results indexed with respect to the Ctrl 1 compound.

**TABLE II**

| | Ctrl.1 | Ctrl.2 | Ctrl.3 | Ctrl.4 | Ctrl.5 | A |
|---|---|---|---|---|---|---|
| Rolling resistance | 100 | 87 | 95 | 74 | 69 | 90 |
| Stiffness | 100 | 160 | 123 | 205 | 185 | 225 |

As shown clearly by the Table II results, the compound according to the present invention has the advantage of greatly improving stiffness without compromising rolling resistance.

The decision was made to index the results with respect to the Ctrl 1 compound, which represents the commonly used solution employing a mixture of two different surface area carbon blacks as the filler.

Analysis of the control compound results shows the above advantages are only obtained by employing both the resin mixture and the carbon black mixture.

More specifically, control compounds Ctrl 2 and Ctrl 3 show how using the resin mixture according to the invention with only one carbon black fails to bring about a significant improvement in stiffness; and control compounds Ctrl 4 and Ctrl 5 show how using the carbon black mixture with only one resin brings about an improvement in stiffness, but only at the expense of a drastic reduction in rolling resistance. It is also important to note how the improvement in stiffness of control compounds Ctrl 4 and Ctrl 5 is nevertheless still lower than that of Compound A according to the invention.

## Claims

1. A structural tyre component compound comprising a cross-linkable, unsaturated-chain polymer base, a reinforcing filler, and curing agents; said compound being **characterized by** comprising a mixture of reinforcing resins, in turn comprising (a) a methylene acceptor resin combined with a methylene donor compound, and (b) a hydrazide-derived resin; and in that said reinforcing filler comprises a mixture of 20 to 80% by weight of carbon black with a hydrogen-absorption-measured surface area (N2SA) of 100 to 150 m²/g, and 80 to 20% by weight of carbon black with a hydrogen-absorption-measured surface area (N2SA) of 33 to 49 m²/g.

2. A compound as claimed in Claim 1, **characterized by** comprising 2 to 20 phr of the reinforcing resin mixture, and 20 to 70 phr of the carbon black total.

3. A compound as claimed in Claim 1 or 2, **characterized in that** the methylene acceptor resin is phenol-formaldehyde resin, and the methylene donor compound is hexamethoxymethylmelamine.

4. A compound as claimed in Claim 3, **characterized in that** the reinforcing resin mixture comprises 20 to 80% by weight of phenol-formaldehyde resin, and 20 to 80% by weight of hydrazide-derived resin.

5. A compound as claimed in one of the foregoing Claims, **characterized in that** said hydrazide-derived resin is selected from the group comprising 2-hydroxy-N'-(1-methylethylidene)-3-naphthoic acid hydrazide, 2-hydroxy-N'-(1-methylpropylidene)-3-naphthoic acid hydrazide, 2-hydroxy-N'-(1-methylbutylidene)-3-naphthoic acid hydrazide, 2-hydroxy-N'-(1,3-dimethylbutylidene)-3-naphthoic acid hydrazide, 2-hydroxy-N'-(2,6-dimethyl-4-heptylidene)-3-naphthoic acid hydrazide, N'-(1-methylethylidene)-salicylic acid hydrazide, N'-(1-methylpropylidene)-salicylic acid hydrazide, N'-(1-methylbutylidene)-salicylic acid hydrazide, N'-(1,3-dimethylbutylidene)-salicylic acid hydrazide, and N'-(2,6-dimethyl-4-heptylidene)-salicylic acid hydrazide.

6. A compound as claimed in any of the foregoing Claims, **characterized in that** the cross-linkable, unsaturated-chain polymer base comprises 40 to 80 phr of natural rubber; and 20 to 60 phr of synthetic rubber in the group comprising butadiene rubber, styrene-butadiene rubber, and isoprene rubber.

7. A structural tyre component made from a rubber compound as claimed in one of the foregoing Claims, and **characterized by** being in the group comprising a TREAD UNDERLAYER, TREAD BASE, BEAD FILLER, ABRASION GUM STRIP and SIDEWALL.

8. A tyre comprising a structural component as claimed in Claim 7.

## Patentansprüche

1. Verbindung eines strukturellen Reifenbestandteils, umfassend eine vernetzbare ungesättigte Polymerkettenbasis, einen verstärkenden Füllstoff und Vulkanisierungsmittel; wobei die Verbindung **dadurch gekennzeichnet ist, dass** sie eine Mischung aus verstärkenden Harzen umfasst, welche ihrerseits (a) ein Methylenakzeptorharz, kombiniert mit einer Methylendonatorverbindung und (b) ein von Hydrazid abgeleitetes Harz umfassen; und dadurch, dass der verstärkende Füllstoff eine Mischung von 20 bis 80 Gewichts-% Ruß mit einem durch Wasserstoffabsorption gemessenen Oberflächenbereich (N2SA) von 100 bis 150 m²/g und 80 bis 20 Gewichts-% Ruß mit einem durch Wasserstoffabsorption gemessenen Oberflächenbereich (N2SA) von 33 bis 49 m²/g umfasst.

2. Verbindung nach Anspruch 1, **gekennzeichnet durch** Umfassen von 2 bis 20 phr der verstärkenden Harzmischung und 20 bis 70 phr des Gesamtrußes.

3. Verbindung nach Anspruch 1 oder 2, **dadurch gekennzeichnet, dass** das Methylenakzeptorharz ein Phenol-Formaldehydharz ist und die Methylendonatorverbindung Hexamethoxymethylmelamin ist.

4. Verbindung nach Anspruch 3, **dadurch gekennzeichnet, dass** die verstärkende Harzmischung 20 bis 80 Gewichts-% Phenol-Formaldehydharz umfasst und 20 bis 80 Gewichts-% von Hydrazid abgeleitetes Harz.

5. Verbindung nach einem der vorstehenden Ansprüche, **dadurch gekennzeichnet, dass** das von Hydrazid abgeleitete Harz ausgewählt ist aus der Gruppe, umfassend 2-Hydroxy-N'-(1-methylethyliden)-3-naphthensäurehydrazid, 2-Hydroxy-N'-(1-methylpropyliden)-3-naphthensäurehydrazid, 2-Hydroxy-N'-(1-methylbutyliden)-3-naphthensäurehydrazid, 2-Hydroxy-N'-(1,3-dimethylbutyliden)-3-naphthensäurehydrazid, 2-Hydroxy-N'-(2,6-dimethyl-4-heptyliden)-3-naphthensäurehydrazid, N'-(1-Methylethyliden)-salicylsäurehydrazid, N'-(1-Methylpropyliden)-salicylsäurehydrazid, N'-(1-Methylbutyliden)-salicylsäurehydrazid, N'-(1,3-Dimethylbutyliden)-salicylsäurehydrazid und N'-(2,6-Dimethyl-4-heptyliden)-salicylsäurehydrazid.

6. Verbindung nach einem der vorstehenden Ansprüche, **dadurch gekennzeichnet, dass** die vernetzbare ungesättigte Polymerkettenbasis 40 bis 80 phr Naturkautschuk umfasst; und 20 bis 60 phr Synthesekautschuk in der Gruppe, umfassend Butadienkautschuk, Styrol-Butadienkautschuk und Isoprenkautschuk.

7. Struktureller Reifenbestandteil, gefertigt aus einer Kautschukverbindung nach einem der vorstehenden Ansprüche und **dadurch gekennzeichnet, dass** er in der Gruppe ist, die eine LAUFFLÄCHENUNTERSCHICHT, LAUFFLÄCHENBASIS, einen KERNREITER, ABRIEBGUMMISTREIFEN und eine SEITENWAND umfasst.

8. Reifen, umfassend einen strukturellen Bestandteil nach Anspruch 7.

## Revendications

1. Composé de composant structural de pneumatique comprenant une base polymère réticulable à chaîne insaturée, une charge renforçante, et des agents de vulcanisation ; ledit composé étant caractérisé en ce **qu**'il comprend un mélange de résines de renforcement, comprenant à son tour (a) une résine acceptrice de méthylène combinée avec un composé donneur de méthylène, et (b) une résine dérivée d'hydrazide ; et en ce que ladite charge renforçante comprend un mélange de 20 à 80 % en poids de noir de carbone avec une surface spécifique mesurée par absorption d'hydrogène (N2SA) de 100 à 150 m²/g, et de 80 à 20 % en poids de noir de carbone avec une surface spécifique mesurée par absorption d'hydrogène (N2SA) de 33 à 49 m²/g.

2. Composé selon la revendication 1, caractérisé en ce **qu**'il comprend 2 à 20 parties pour cent de résine du mélange de résines de renforcement, et 20 à 70 parties pour cent de résine du total de noir de carbone.

3. Composé selon la revendication 1 ou 2, **caractérisé en ce que** la résine acceptrice de méthylène est une résine phénol-formaldéhyde, et le composé donneur de méthylène est l'hexaméthoxyméthylmélamine.

4. Composé selon la revendication 3, **caractérisé en ce que** le mélange de résines de renforcement comprend 20 à 80 % en poids de résine phénol-formaldéhyde, et 20 à 80 % en poids de résine dérivée d'hydrazide.

5. Composé selon l'une des revendications qui précèdent, **caractérisé en ce que** ladite résine dérivée d'hydrazide est choisie dans le groupe comprenant l'acide 2-hydroxy-N'-(1-méthyléthylidène)-3-naphtoïque hydrazide, l'acide 2-hydroxy-N'-(1-méthylpropylidène)-3-naphtoïque hydrazide, l'acide 2-hydroxy-N'-(1-méthylbutylidène)-3-naphtoïque hydrazide, l'acide 2-hydroxy-N'-(1,3-diméthylbutylidène)-3-naphtoïque hydrazide, l'acide 2-hydroxy-N'-(2,6-diméthyl-4-heptylidène)-3-naphtoïque hydrazide, l'acide N'-(1-méthyléthylidène)-salicylique hydrazide, l'acide N'-(1-méthylpropylidène)-salicylique hydrazide, l'acide N'-(1-méthylbutylidène)-salicylique hydrazide, l'acide N'-(1,3-diméthylbutylidène)-salicylique hydrazide, et l'acide N'-(2,6-diméthyl-4-heptylidène)-salicylique hydrazide.

6. Composé selon l'une quelconque des revendications qui précèdent, **caractérisé en ce que** la base polymère réticulable à chaîne insaturée comprend 40 à 80 parties pour cent de résine de caoutchouc naturel ; et 20 à 60 parties pour cent de résine de caoutchouc synthétique dans le groupe comprenant le caoutchouc butadiène, le caoutchouc styrène-butadiène et le caoutchouc isoprène.

7. Composant structural de pneumatique fabriqué à partir d'un composé de caoutchouc selon l'une des revendications qui précèdent, et caractérisé en ce **qu**'il se trouve dans le groupe comprenant une SOUS-COUCHE DE BANDE DE ROULEMENT, une BASE DE BANDE DE ROULEMENT, un REMPLISSAGE DE BOURRELET, une BANDE DE GOMME D'ABRASION et un FLANC.

8. Pneumatique comprenant un composant structural selon la revendication 7.
